# EUROPEAN PATENT SPECIFICATION

(11) **EP 2 082 671 B1**
(45) Date of publication and mention of the grant of the patent: **28.07.2010**
(21) Application number: 08380015.1
(22) Date of filing: 25.01.2008
(51) Int. Cl.: A47J 36/04, B65D 81/34

(54) **Bag for cooking food and method of manufacturing a sheet body to form said bag**
Beutel zum Kochen von Nahrungsmitteln und Verfahren zur Herstellung eines Blattes eines solchen Beutels
Sachet de cuisson pour aliments et procès de fabrication d'une feuille pour former ce sachet

(43) Date of publication of application: 29.07.2009
(73) Proprietor: Lekue, S. L., 08120 La Llagosta (ES)
(72) Inventor: Huber, Lukas Werner, 08003 Barcelona (ES); Llorente Homanpera, José Maria, 08388 Tiana (Barcelona) (ES)
(74) Representative: Gislon, Gabriele

(56) References cited:
- CN-Y- 200 971 239
- FR-A- 1 298 271
- GB-A- 2 397 288
- US-A1- 2003 021 925
- US-B1- 7 034 256

## Description

### Technical Field

The present invention relates to a bag for cooking food, formed by a sheet body and a cord made integrally from an elastomer material, such as a platinum catalyzed silicone, whereby the bag is washable and reusable. The present invention also relates to a method for manufacturing the mentioned sheet body to form the bag for cooking food comprising a molding and vulcanization operation and a die-cutting or cutting operation.

### Background of the invention

It is known cooking food by placing it in a basket, for example made of metal mesh, and submerging the basket with the food into a boiling liquid in a vessel. The basket generally has one or more handles whereby the basket can be grasped and taken out of the vessel. One drawback is that the basket has fixed dimensions which must agree with the dimensions of the vessel. In addition, the handles of the basket are placed inside the vessel and this forces introducing the hand inside the vessel in which the liquid boils in order to grasp the handles of the basket or using a tool to grasp them.

It is also known wrapping food in a piece of fabric or textile mesh in order to form a packet and submerge the packet with the food into a boiling liquid in a vessel. This forces closing the packet with seams or knots which are difficult to undo after the packet has been taken out of the boiling liquid. Furthermore since it lacks handles, the packet must be removed from the vessel with the aid of a kitchen utensil. The piece of fabric or textile mesh must be washed and hung in order to dry it if its reuse is desired.

For another matter, the use of flexible molds made from platinum catalyzed silicone in order to make cakes, sponge cakes, etc. is known. These molds have one or more cavities open at the upper part which can be filled with dough and the mold can be placed in the oven in order to cook the dough. However, these types of molds are not able to mold a thin dough, for example a pizza base or pasta for raviolis, in order to give it a closed or almost closed bag shape containing a filling or other ingredients.

The document FR-1298271 disclosed a cooking bag.

### Disclosure of the invention

According to a first aspect, the present invention provides a bag for cooking food formed by a sheet body made of an elastomer material, such as platinum catalyzed silicone, with a central region, a perimetrical band surrounding said central region and a series of holes distributed along said perimetrical band, and a cord passed through said holes such that a tightening of said cord causes a gathering of said perimetrical band and configures said central region as a container for said food. The bag, in a closed position and containing food, can be introduced in an oven, either a conventional oven or a microwave oven, to cook the food, or can be submerged in a boiling liquid inside a vessel to scald the food or in a cold liquid to cool it. The bag can be additionally used as a deformable and adaptable mold to give shape to food which can be subsequently cooked inside the same bag or can be removed from the bag to be cooked in another manner or consumed without subsequent cooking.

Throughout this description the term "central region" is used to refer to an extensive inner region of the sheet body limited by the perimetrical band, and not exclusively a region near a geometric center of the sheet body.

In one embodiment, the central region of the sheet body is provided with a cut or opening, and preferably with a plurality of cuts or openings to facilitate the passage of liquid both during immersion inside a vessel containing a liquid and in a subsequent draining phase outside the vessel, or to facilitate the passage of hot air and/or radiation when the bag is used to cook food in an oven. The cuts or openings 6 can be further configured to provide the central region of the sheet body with a mesh structure with the ability to expand by elastic deformation, such that the bag can grow so as to be adapted to different volumes of food. The mentioned mesh structure preferably covers the entire extension of the central region to the perimetrical band.

The mentioned cord is preferably integrated in a closing element made of an elastomer material, such as platinum catalyzed silicone, defining the cord and a handgrip formed integrally at a first end of the cord. The second end of the cord can be fixed to the first end by means of holes formed in the mentioned handgrip without needing knots. In a mid-area of the cord there are protruding rugosities acting as a brake in cooperation with some of the holes of the perimetrical band of the sheet body to maintain the bag in a closed position. In such closed position, the handgrip is kept away from the bag such that, during a scalding for example, the handgrip can hang outside the vessel containing the boiling liquid ready to be grasped comfortably and without a risk of bums in order to remove the bag from the vessel. The handgrip can alternatively be grasped to handle the bag full of food, for example to introduce and remove the bag from the oven, etc.

The bag of the present invention can be used as a mold, for example arranging the completely open bag with the sheet body extended on a planar site, placing raw pizza dough on the sheet body, spreading desired ingredients on the dough, and pulling the cord to gather the perimetrical band and close the bag, whereby the pizza dough will substantially adopt the shape of the bag with a gathered upper edge. If the bag with the pizza dough in this position is introduced in an oven, the dough will be cooked maintaining the mentioned shape. Furthermore, if the central region of the sheet body has the mesh structure described above, the heat of the oven will toast the areas of the dough exposed through the openings of the mesh structure more than the areas opposing the material of the sheet body forming the mesh structure, such that a toasted color will reproduce the shape of the mesh structure on the outer surface of the pizza dough providing a surprising and attractive appearance. Preferably, on the inner face of the sheet body and around the central region, for example between the central region and the perimetrical band, a plurality of protuberances are formed, the purpose of which is to maintain the pizza dough in position while the bag is closed and subsequently handled in order to introduce it into the oven

Another application of the bag of the present invention as a deformable and adaptable mold is preparing Chinese raviolis. To that end a bag of small dimensions adapted to the size of the raviolis will be used. The bag is arranged completely open with the sheet body extended on a planar site, raw dough made of flour and water for ravioli is arranged on the sheet body, an amount of filler food is placed on top of the dough and the cord is pulled to gather the perimetrical band of the sheet body and close the bag, assuring that an upper edge of the dough is gathered and joined closing the filling therein. The bag is then opened to remove the ravioli and is ready to prepare the next ones. The raviolis thus prepared can be subsequently cooked without using the bag of the present invention. Alternatively, the bag of the present invention can be used to mold and optionally cook stuffed cabbage leaves and other similar dishes.

According to a second aspect, the present invention provides a method for manufacturing the sheet body forming part of the bag for cooking food. The method comprises the steps of first carrying out a molding and vulcanization operation for molding and vulcanizing an elastomer material, such as platinum catalyzed silicone, to produce said sheet body with a central region without cuts or openings surrounded by a perimetrical band with a series of holes distributed along such band, and then subjecting the sheet body thus obtained to a subsequent cutting or die-cutting operation to form at least one cut or opening in said central region. Preferably, by means of the mentioned cutting or die-cutting operation, a plurality of cuts or openings are formed to provide the central region with a mesh structure with an ability to expand by elastic deformation increased thanks to the configuration of the cuts or openings.

This two-step manufacturing method has several advantages. On the one hand, the fact of forming the sheet body with the central region without cuts or openings significantly simplifies the mold used in the molding and vulcanization operation, and consequently reduces the manufacturing costs given that the subsequent cutting or die-cutting operation can be carried out in a more cost-effective manner. On the other hand, a number of identical laminar bodies can be produced by molding and vulcanizing by means of a single mold, and the central regions of the laminar bodies can be subsequently cut or die-cut according to different patterns of cuts or openings in order to produce different bag models. Thus, several different bag models can be produced at a reduced additional cost with a single mold.

### Brief Description of the Drawings

The previous and other features and advantages will be more fully understood from the following detailed description of several exemplary embodiments with reference to the attached drawings in which:
Figure 1 is a perspective view of a bag for cooking food according to a first embodiment of the present invention in a closed position and containing food;
Figure 2 is a plan view of the inner side of the bag for cooking food of Figure 1 in an open position;
Figure 3 is a plan view of an inner face of a sheet body forming part of the bag of Figures 1 and 2;
Figure 4 is a plan view of an outer face of the sheet body of Figure 3;
Figures 5 and 6 are partial perspective views showing details of the inner face and the outer face, respectively, of the sheet body of Figures 3 and 4;
Figure 7 is a partial elevational view showing a detail of a perimetrical band of the sheet body of Figures 3 and 4;
Figure 8 is a plan view of the inner side of a bag for cooking food according to a second embodiment of the present invention in an open position;
Figure 9 is a perspective view of a closing element forming part of the bag for cooking food both of the first and second embodiments, and integrating a cord and a handgrip formed at a first end of the cord;
Figure 10 is a cross-sectional view of the cord of the closing element of Figure 9;
Figure 11 is a cross-sectional view of the handgrip of the closing element of Figure 9;
Figure 12 is a cross-sectional view of the handgrip with the second end of the cord fixed thereto;
Figure 13 is a perspective view showing the fixing of the second end of the cord to the first end by means of the handgrip;
Figure 14 is a perspective view of the opposite side of the handgrip showing an optional hooking configuration;
Figure 15A is a front view showing a portion of the central region of the sheet body of the bag according to the first embodiment shown in Figures 1 to 7 with openings providing a mesh structure;
Figure 15B is a front view of the same central region of the sheet body shown in Figure 15A with the mesh structure expanded by elastic deformation;
Figure 16 is a front view showing a portion of the central region of the sheet body of a bag according to another embodiment with openings providing a mesh structure;
Figure 17 is a front view showing a portion of the central region of the sheet body of a bag according to still another embodiment with openings providing a mesh structure;
Figure 18A is a front view showing a portion of the central region of the sheet body of a bag according to another additional embodiment, with cuts able to provide a mesh structure; and
Figure 18B is a front view of the same central region of the sheet body shown in Figure 18A with the mesh structure expanded by elastic deformation.

### Detailed Description of Exemplary Embodiments

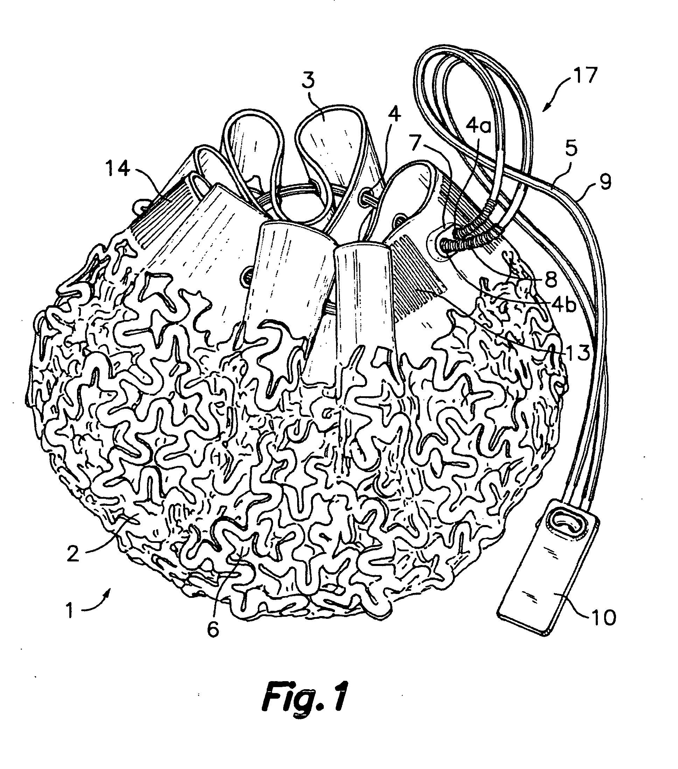

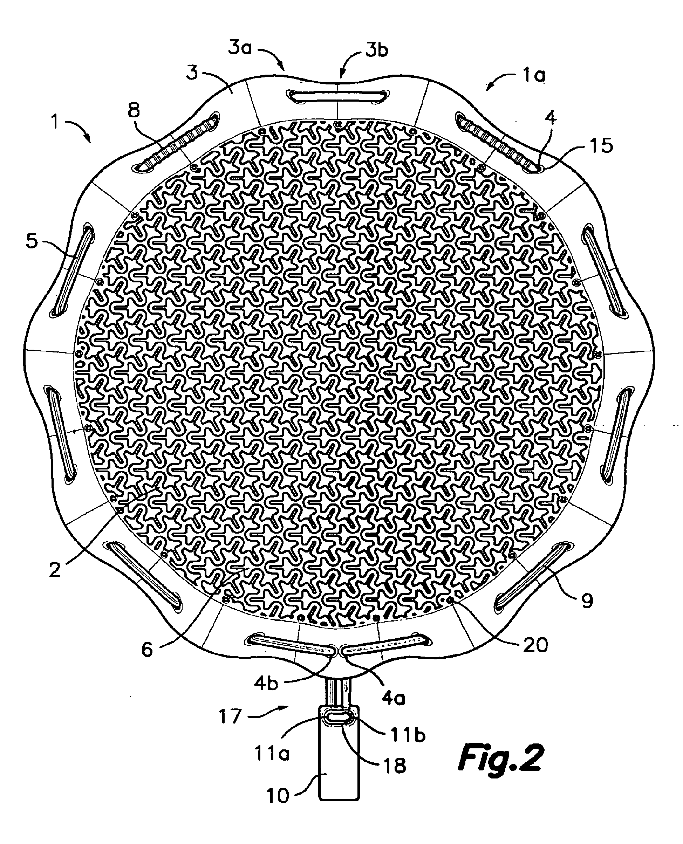

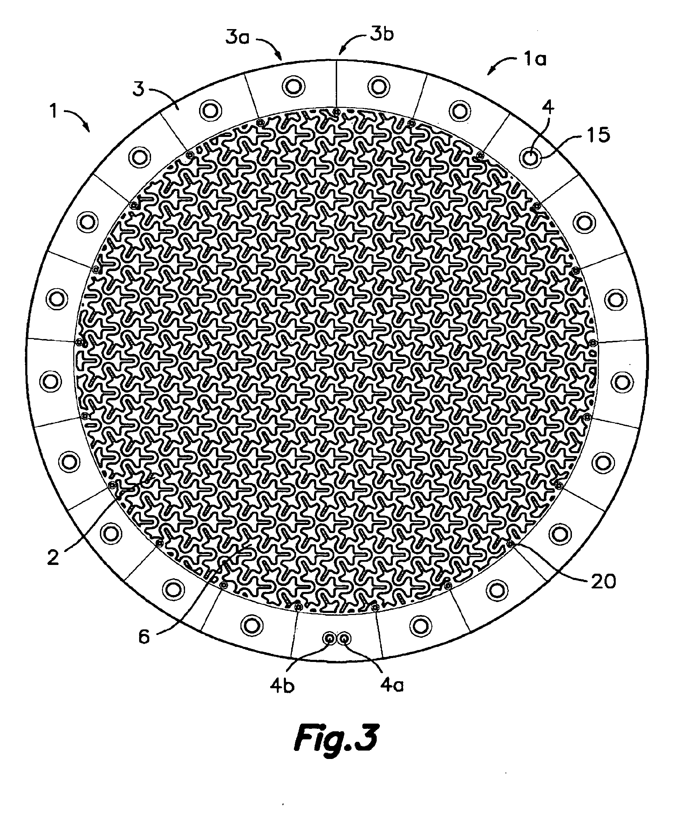

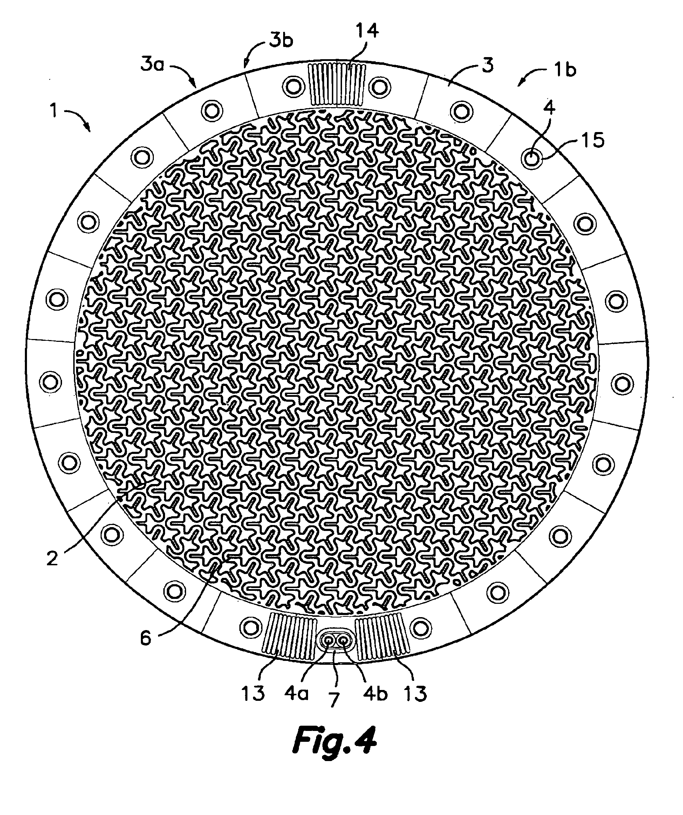

Referring first to Figures 1 and 2, the bag for cooking food of the present invention comprises, according to a first exemplary embodiment, a sheet body 1 (shown separately in Figures 3 and 4) made of an elastomer material, having a central region 2 surrounded by a perimetrical band 3. A series of holes 4, 4a, 4b are formed and distributed along said perimetrical band 3, and a cord 5 is passed through said holes. The mentioned cord 5 can thus be tightened to cause a gathering of the perimetrical band 3, and consequently a deformation of said central region 2 that configures a container able to contain food. The elastomer material which the sheet body 1 and the cord 5 are made of is suitable for culinary uses and resistant to high and low temperatures, therefore the bag, in the closed position and containing food shown in Figure 1, can be submerged in a boiling liquid, for example to scald or boil the food, or in a cold liquid, for example to wash, soak or marinate the food, or can be introduced in an oven, either a conventional oven or a microwave oven, for example to cook or heat the food. The bag of the present invention can further be used as a mold for the food, given that this food, especially if it is malleable such as for example dough made of flour and water or agglomerates, will have the tendency to adopt the shape of the bag when it is in the closed position. The food thus molded can be cooked inside the bag or removed from the bag to be cooked in another manner.

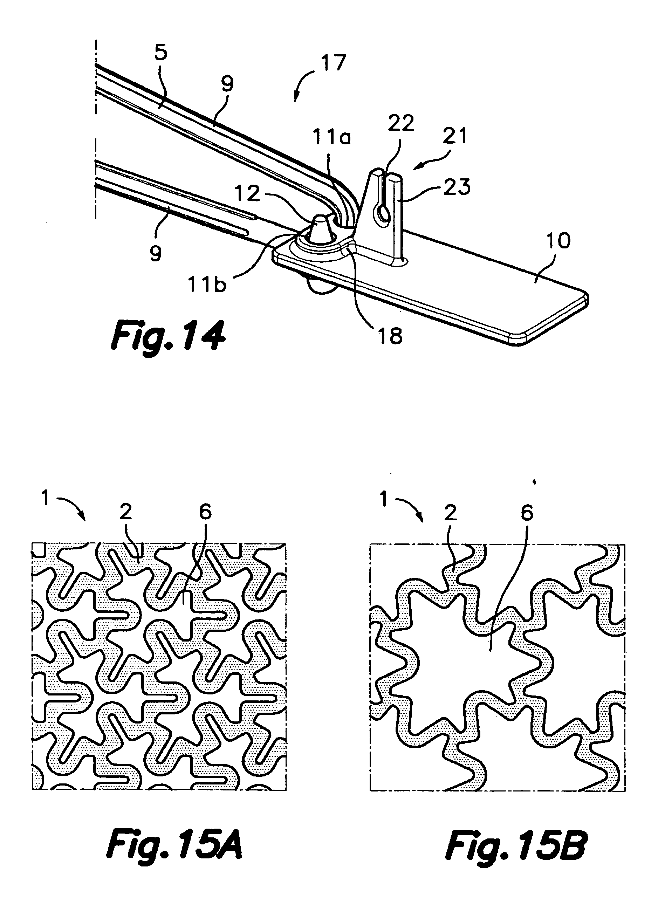

The central region 2 is preferably provided with a plurality of openings 6 to facilitate the passage of liquid, of heat and/or of infrared or microwave radiation. The openings 6 can have several shapes able to provide the central region 2 with a mesh structure with the ability to expand by elastic deformation, or can even simply be cuts in the central region 2 which will provide the openings 6 when the sheet body 1 is expanded by elastic deformation. Several examples of said cuts or openings 6 will be described below with reference to Figures 15A to 18B.

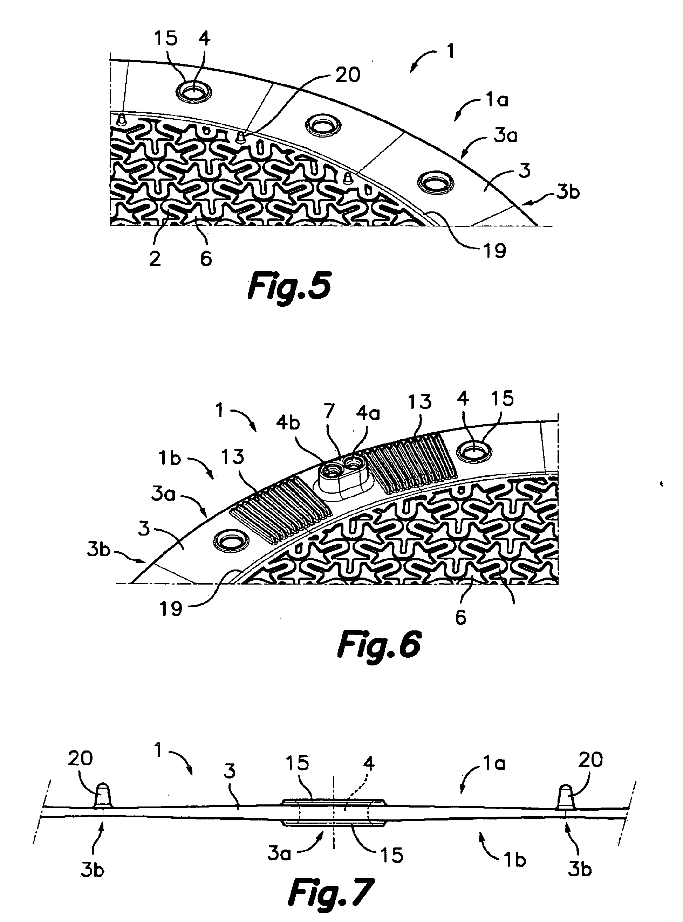

In relation now with Figures 3 to 6, several particular features of the sheet body 1 according to the first embodiment are described below. Firstly, the sheet body 1 has an inner face I a shown in Figure 3 and an outer face 1b shown in Figure 4. The mesh structure provided by the openings 6 extends over the entire central region 2 to the perimetrical band 3, and all the holes 4, 4a, 4b in the perimetrical band 3 traverse the sheet body 1 connecting the inner and outer faces 1a, 1b. The mentioned series of holes 4, 4a, 4b comprises an initial hole 4a and a final hole 4b, which are contiguous to one another. The mentioned initial hole 4a and final hole 4b are formed through a thickened portion 7 of the perimetrical band 3, which forms a protrusion (better shown in Figure 6) extending outwardly from the outer face 1b. A pair of first areas with embossments 13, the purpose of which is to increase the heat transfer surface in order to prevent bums and to facilitate the grasping of the perimetrical band 3 are also located on the perimetrical band 3, on both sides of the mentioned thickened portion 7 in which the initial and final holes 4a, 4b are formed. A second area with embossments 14 having the same purpose of increasing the heat transfer surface and facilitating the grasping is located in a diametrically opposite area of the perimetrical band 3. The first and second areas with embossments 13, 14 are formed on the outer face 1b of the sheet body 1. Thus, the bag removed from a boiling liquid or from an oven can be easily and safely opened by grasping the perimetrical band 3 at the first and second areas with embossments 13, 14 and pulling them.

As is better shown in the details of Figures 5 and 6, each of the holes 4 of the perimetrical band 3, except the initial and final holes 4a, 4b, is surrounded by a ring-shaped raised edge 15 projecting both from the inner face 1a and from the outer face 1b, and the purpose of which is to reinforce the rim of the hole and prevent tears, although alternatively the mentioned ring-shaped raised edges 15 could be formed on only one of the inner or outer faces 1a, 1b with an equivalent result. Another feature of the sheet body 1, better shown in Figure 7, is that the perimetrical band 3 has a thickness varying between maximum thickness areas 3a, in which the holes 4, 4a, 4b are located, and minimum thickness areas 3b located between the holes 4, 4a, 4b and in which consequently there are no holes 4, 4a, 4b. The maximum thickness areas 3a reinforce the areas in which the holes 4, 4a, 4b are located and the minimum thickness areas 3b facilitate the gathering of the perimetrical band 3. On the contrary, in the first embodiment depicted in Figures 1 to 7, the entire central region 2 has the same thickness, and between the perimetrical band 3 and the central region 2 there is a narrow transition band 19 configured to absorb the variations of thickness between both (Figure 5). Alternatively, instead of having a uniform thickness, the central region 2 can include areas with different thicknesses, for example as an extension of the maximum and minimum thickness areas 3a, 3b of the perimetrical band 3.

A plurality of separated protuberances 20, for example in the shape of teeth (better shown in Figures 5 and 7), project from the inner face of the sheet body 1, said protuberances 20 being distributed around the central region 2 near a boundary region between the central region 2 and the perimetrical band 3. Alternatively or additionally, said protuberances 20 could be located in the central region 2 and/or on the perimetrical band 3. The purpose of the protuberances 20 is that of aiding to maintain the food in a desired position in relation to the sheet body 1 when the food has been molded by the bag. For example, if raw pizza dough is placed on the sheet body 1 of the completely open bag, optionally with several ingredients spread on such dough, upon pulling the cord to gather the perimetrical band, the bag will adopt the closed position, forcing the pizza dough to substantially adopt the same shape of the closed bag, with a gathered upper edge. The protuberances 20 of the sheet body I will make contact with the edges of the raw pizza dough, or will at least partially penetrate therein, in order to maintain it in the suitable position during the bag closing operation and during the subsequent cooking operation for cooking the dough and other ingredients inside the bag in an oven. The protuberances 20 will obviously act similarly with other types of food.

The sheet body 1 forming part of the bag of the present invention can thus be manufactured by a method which first comprises carrying out an operation for molding, for example injection molding or molding by pressing, and vulcanizing an elastomer material to produce the sheet body I with a central region 2 without openings, generally although not indispensably with a uniform thickness, surrounded by the perimetrical band 3 in which the series of holes 4, 4a, 4b with the ring-shaped raised edges 15, the thickened portion 7, the first and second areas with embossments 13, 14, the protuberances 20 and the alternating maximum and minimum thickness areas 3a, 3b are formed. Once the sheet body 1 is obtained in this manner by molding and vulcanization, it can be subjected to a subsequent cutting or die-cutting operation to form the plurality of cuts or openings 6 in said central region 2. The elastomer material used can be platinum catalyzed silicone, which is suitable for culinary uses, which is resistant to both high and low temperatures, and furthermore is easily washable and reusable, with a long duration.

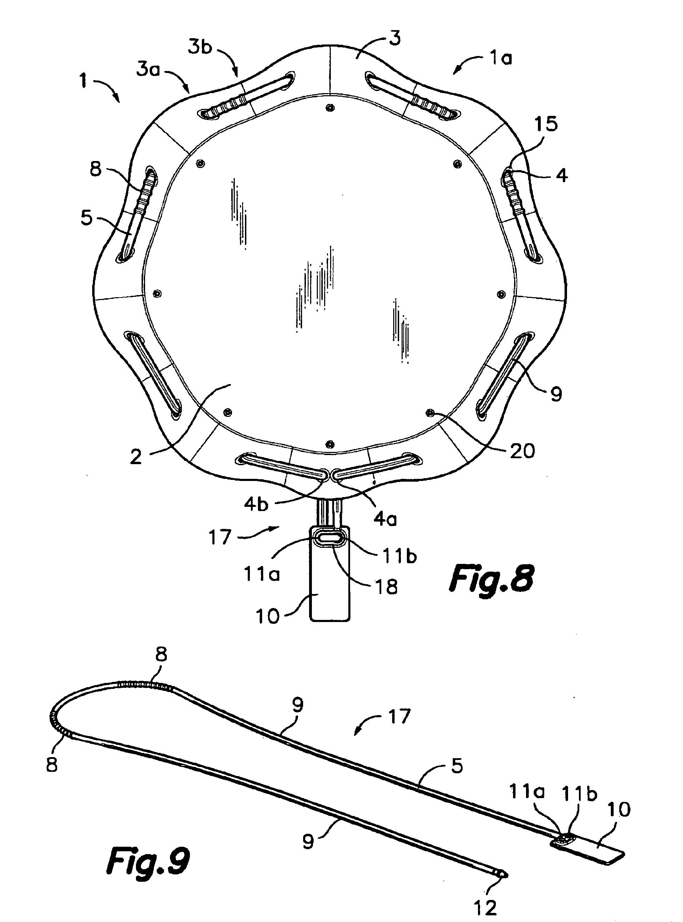

Figure 8 shows a second alternative exemplary embodiment of the bag for cooking food according to the present invention, which essentially differs from the first embodiment in that the central region 2 of the sheet body 1 is continuous, i.e. it lacks cuts or openings. As in the first embodiment, the perimetrical band 3 has a series of holes 4, 4a, 4b through which a cord 5 forming part of a closing element 17 is passed. Said closing element 17 is similar to that shown in Figures 1 and 2 and will be described in detail below in relation to Figures 9 to 13. The holes 4 have a reinforcing ring-shaped raised edge 15. A plurality of protuberances 20 projecting inwards, distributed around the central region 2 near a boundary area between the central region 2 and the perimetrical band 3 are formed on the inner face la of the sheet body 1, shown in Figure 8. Similarly to the first embodiment, the perimetrical band 3 can include a thickened portion 7 through which the initial and final holes 4a, 4b are formed and first and second areas with embossments 13, 14 on the outer face I b of the sheet body 1 (not shown). The bag of the second embodiment depicted in Figure 8 is smaller than that of the first embodiment and is suitable to be used as a mold for molding food to be cooked outside the bag, for example such as Chinese raviolis and the like, or to be consumed without subsequent cooking, although the bag of the second embodiment can also be used to cook the food molded inside the bag in an oven for example.

An exemplary embodiment for a closing element 17 forming part of the bag for cooking food of the present invention is described below in relation with Figures 9 to 13. Said closing element 17 integrates the cord 5 and a handgrip 10 formed integrally at a first end of the cord 5. The closing element 17 is made, like the sheet body 1, of an elastomer material such as for example platinum catalyzed silicone, and can be obtained with all its features by means of a molding and vulcanization operation. The cord 5 has, in a mid-area between its two ends, a pair of portions provided with protruding rugosities 8, for example in the form of ring-shaped ribs, positioned to be inserted in the initial and final holes 4a, 4b of the perimetrical band 3 of the sheet body 1 when the bag is in the closed position shown in Figure 1. The mentioned rugosities 8 of the cord 5 act as a brake in cooperation with the inner surfaces of the initial and final holes 4a, 4b in order to maintain the perimetrical band 3 gathered and the bag in the closed position. Alternatively, the cord could have a single portion with rugosities 8 of a suitable length with an equivalent result. The cord 5 further has, between said portions with rugosities 8 and its two ends, another pair of portions provided with longitudinal ribs 9 to facilitate the sliding through the holes 4, 4a, 4b.

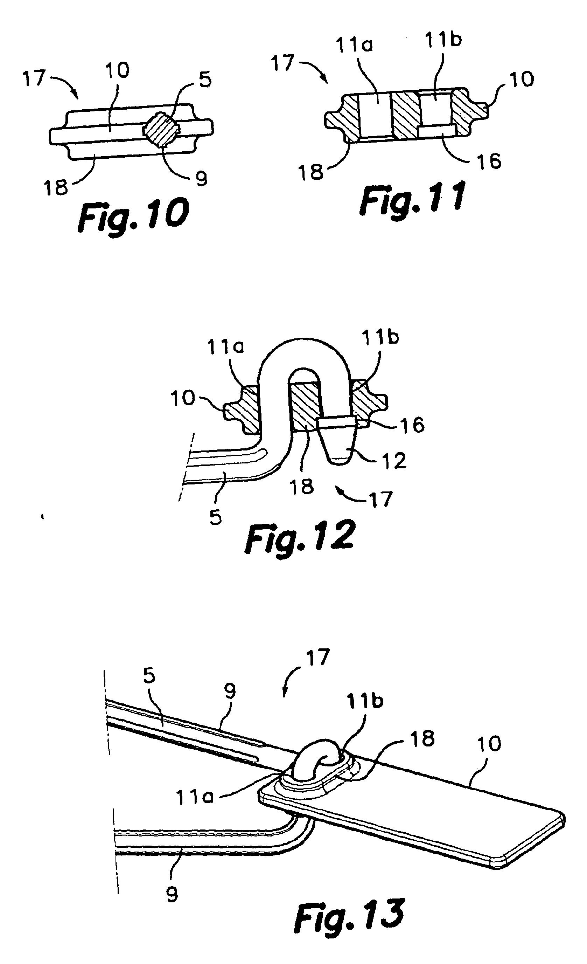

The mentioned handgrip 10 is in the shape of a plate and is provided with a securing configuration for securing the second end of the cord 5 to the handgrip 10. The handgrip 10 more specifically comprises a thickened area 18, through which first and second contiguous securing orifices 11a, 11b provided for the consecutive insertion of said second end of the cord 5 opposite to said first end are formed. The second end of the cord 5 has a thickened configuration 12, for example in the shape of a mushroom, sized to be locked in a widened mouth 16 (Figs. 11 and 12) formed in the final mouth of said second securing orifice 11b of the handgrip 10. The second end of the cord 5 can thus be tied with the first end by simply passing the second end through the first and second securing orifices 11a, 11b of the handgrip 10 until locking the thickened configuration 12 in the widened mouth 16 of the second orifice, and without the need of making knots.

The length of the cord 5 is sized to allow opening the bag and substantially extending the sheet body 1 without the need of untying the ends of the cord 5, such that in the completely open position (Figs. 2 and 8) the handgrip 10 is adjacent to the initial and final holes 4a, 4b of the perimetrical band 3. The handgrip 10 facilitates grasping the cord 5 during the bag opening and closing operations. Furthermore, when the bag is in the closed position and containing food (Fig. 1), the first and second ends of the cord 5 tied by means of the handgrip 10 are kept away from the perimetrical band 3, such that the handgrip 10 can, for example, hang outside a vessel containing boiling liquid while the closed bag containing food is submerged therein. Thus, to remove the bag from the boiling liquid it is sufficient to comfortably grasp the handgrip 10 located outside the vessel and pull the same in order to take out the bag. The handgrip is also useful for handling the bag in the closed position and containing food when it is being used to cook in the oven, for example.

The handgrip 10 optionally includes a hooking configuration 21 suitable to secure the handgrip 10 to the edge of a vessel, for example a vessel containing a liquid in which the bag is submerged. In the embodiment shown in Figure 14, the mentioned hooking configuration 21 comprises a slit 22 formed in a flange 23 extending from a face of the handgrip 10. The slit 22 has a widened bottom to receive the edge of the vessel. Many other hooking configurations will readily occur to one skilled in the art without departing from the scope of the present invention. For example, the hooking configuration could alternatively have the shape of a slit formed directly in the plate of the handgrip 10.

The platinum catalyzed silicone used both for the sheet body 1 and for the closing element 17 is very suitable for culinary uses, given that it does not retain flavors, transmits heat uniformly, is resistant both to high and low temperatures, and in addition it is easily washable and reusable, with a long duration.

With reference to Figures 15A to 18B, several embodiments for the cuts or openings 6 in the central region 2 of the sheet body I are described below, which have the purpose of allowing the passage of boiling liquid during a boiling or scalding operation, facilitating the draining of the liquid once the bag is removed from the vessel in which the boiling or scalding has been carried out, facilitating the passage of hot air and/or radiation during a cooking operation in a conventional or microwave oven, and allowing a certain view of the food enclosed in the bag. The cuts or openings 6 can further provide a greater or lesser expansion ability to the sheet body depending on its configuration. However in the second embodiment shown in Figure 8, the central region 2 of the sheet body I has not any cut or opening. In another alternative embodiment, not shown, the central region 2 can incorporate a single cut or opening preferably located in the center of the central region 2 for the passage of liquid, or a reduced number of cuts or openings grouped in the center or distributed over the entire central region 2 without providing a mesh structure.

In the embodiment of Figures 15A and 15B the openings 6 are all identical and, in a rest position such as that shown in Figure 15A, each opening 6 has a roundabout winding contour combining narrow elongated areas with wide concavities. The openings 6 are arranged such that the narrow elongated areas of the openings 6 penetrate the concavities of the adjacent openings 6. This configuration and arrangement of the openings 6 provides the central region 2 of the sheet body I with a mesh structure having a great ability to expand by elastic deformation. Figure 15B shows the mesh structure of the central region 2 in an expanded position provided by elastic deformation of the openings 6. For example, in a cooking operation for cooking pizza dough molded inside a bag provided with the openings 6 of Figure 15A, the heat of the oven will produce a toasted color reproducing the pattern of the openings 6 of the expanded mesh structure, such as that shown in Figure 15B, on the outer surface of the pizza dough.

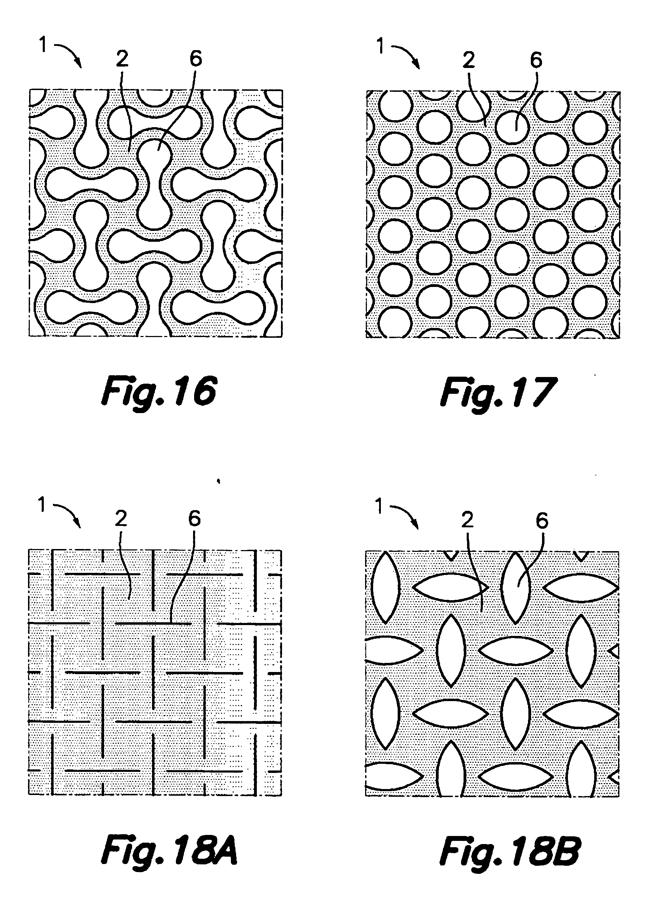

In the embodiment of Figure 16 the openings 6 are also all identical and have an eight shape combining two enlarged convex areas at opposite ends joined by a narrow concave area. The openings 6 are arranged with the mentioned enlarged convex areas near the concave narrow areas of the adjacent openings 6. This configuration and arrangement of the openings 6 provides the central region 2 of the sheet body 1 with a mesh structure with a certain ability to expand by elastic deformation, such that it can adopt an expanded position (not shown) that is easy to imagine.

In the embodiment of Figure 17 the openings 6 have a circular shape and are arranged in a quincunx manner, such that they provide the central region 2 of the sheet body I with a mesh structure with a limited ability to expand by elastic deformation. The expanded position of the mesh structure provided by circular openings 6 is not shown.

In the embodiment of Figures 18A and 18B, the central region 2 of the sheet body I comprises a plurality of rectilinear cuts 6 arranged in a staggered manner in orthogonal directions, without the cuts 6 touching one other. In a rest position such as that shown in Figure 18A, the cuts 6 are maintained substantially closed. When the central region 2 of the sheet body 1 is strained, the cuts 6 open, forming openings which provide a mesh structure with an ability to expand by elastic deformation. Figure 18B shows in an idealized manner the mesh structure provided by the cuts 6 in the expanded position.

Different shapes and alternative arrangements for the cuts and/or openings in the central region of the sheet body would easily occur to one skilled in the art. For example, the cuts in the central region could be winding and/or branched instead of rectilinear and the openings could have an infinite number of shapes different from those shown. Combinations of two or more openings of different shapes, combinations of two or more cuts with different configurations, or combinations of cuts and openings are also within the scope of the present invention.

A person skilled in the art will likewise be able to carry out modifications and variations in the sheet body and/or in the cord or closing element based on the shown and described embodiments without departing from the scope of the present invention as it is defined in the attached claims.

## Claims

1. A bag for cooking food, comprising a sheet body (1) made of an elastomer material with an inner or central region (2) surrounded by a perimetrical band (3) and a series of holes (4, 4a, 4b) distributed along said perimetrical band (3), and a cord (5) passed through said holes (4, 4a, 4b) of the perimetrical band (3), such that an actuation on said cord (5) causes a gathering of said perimetrical band (3) and configures said central region (2) as a deformable container for said food, said elastomer material being suitable so that said bag containing food can be introduced in a conventional oven or a microwave oven, or submerged in a cold or hot liquid.

2. A bag according to claim 1, **characterized in that** said series of holes (4, 4a, 4b) comprises an initial hole (4a) and a final hole (4b), and said cord (5) is made of an elastomer material and has at least one portion provided with protruding rugosities (8) able to act as a brake in cooperation with inner surfaces of said initial and final holes (4a, 4b) in order to maintain the perimetrical band (3) gathered in a closed bag position.

3. A bag according to claim 2, **characterized in that** the cord (5) has at least an additional portion provided with longitudinal ribs (9) in order to facilitate the sliding through the holes (4, 4a, 4b).

4. A bag according to claim 1, 2 or 3, **characterized in that** the cord (5) is integrated in a closing element (17) made from said elastomer material, said closing element (17) having a handgrip (10) integrally formed at a first end of the cord (5).

5. A bag according to claim 4, **characterized in that** said handgrip (10) has the shape of a plate and includes a securing configuration to secure the second end of the cord (5) to the handgrip (10).

6. A bag according to claim 5, **characterized in that** said handgrip (10) further includes a hooking configuration (21) to secure the handgrip (10) to an edge of a vessel.

7. A bag according to claim 2, **characterized in that** said initial hole (4a) is contiguous to said final hole (4b) and both are formed through a thickened portion (7) of the perimetrical band (3).

8. A bag according to claim 7, **characterized in that** said sheet body (1) has an inner face (1a) and an outer face (1b), and the perimetrical band (3) comprises, on the outer face (1b) of the sheet body (1), a pair of first areas with embossments (13) adjacent to said initial and final holes (4a, 4b) and at least one second area with embossments (14) on an opposite area.

9. A bag according to claim 8, **characterized in that** said thickened portion (7) forms a protrusion extending outwardly from said outer face (1b).

10. A bag according to claim 8, **characterized in that** each one of the holes (4) in the perimetrical band (3), except the initial and final holes (4a, 4b), is surrounded by a ring-shaped raised edge (15) on at least one of said inner face (1a) and outer face (1b) of the sheet body (1).

11. A bag according to claim 8, **characterized in that** a plurality of protuberances (20) with the ability to fix or retain food are formed projecting from said inner face (1a) of the sheet body (1) in the central region (2), on the perimetrical band (3), and/or in an boundary region between both.

12. A bag according to claim 1, **characterized in that** the perimetrical band (3) has a thickness which varies alternately between maximum thickness areas (3a) in which the holes (4, 4a, 4b) are located, and minimum thickness areas (3b) in which there are no holes (4, 4a, 4b).

13. A bag according to claim 12, **characterized in that** the central region (2) of the sheet body (1) includes areas with different thicknesses in accordance with said maximum and minimum thickness areas (3a, 3b) of the perimetrical band 3.

14. A bag according to any one of the previous claims, **characterized in that** the central region (2) of said sheet body (1) is provided with at least one cut or opening (6).

15. A bag according to claim 14, **characterized in that** the central region (2) is provided with a plurality of cuts or openings (6).

16. A bag according to claim 15, **characterized in that** said cuts or openings (6) in the central region (2) are formed to provide a mesh structure with the ability to expand by elastic deformation.

17. A bag according to claim 16, **characterized in that** said mesh structure provided by the cuts or openings (6) extends substantially over the entire central region (2) to the perimetrical band (3).

18. A bag according to any one of the previous claims, **characterized in that** said elastomer material is a platinum catalyzed silicone.

19. A method for manufacturing a sheet body forming part of a bag for cooking food, comprising the steps of:
carrying out a molding and vulcanization operation for molding and vulcanizing an elastomer material to produce said sheet body (1) with a central region (2) surrounded by a perimetrical band (3) and a series of holes (4, 4a, 4b) distributed along said perimetrical band (3); and
subjecting the sheet body (1) to a subsequent cutting or die-cutting operation to form at least one cut or opening (6) in said central region (2).

20. A method according to claim 19, **characterized in that** it comprises forming a plurality of said cuts or openings (6) in the central region (2) by means of said cutting or die-cutting operation, said cuts or openings (6) being configured to provided a mesh structure with the ability to expand by elastic deformation.

21. A method according to claim 20, **characterized in that** it comprises forming said mesh structure provided by the cuts or openings (6) extending substantially over the entire central region (2) to the perimetrical band (3).

22. A method according to claim 19, 20 or 21, **characterized in that** it comprises using a platinum catalyzed silicone as said elastomer material to produce the sheet body (1) by means of said molding and vulcanization operation.

## Patentansprüche

1. Beutel zum Kochen von Nahrungsmitteln, umfassend einen aus einem elastomeren Material hergestellten Folienkörper (1) mit einer inneren oder zentralen, von einem umlaufenden Band (3) umgebenen Region (2), und eine Reihe von Löchern (4, 4a, 4b), welche entlang des genannten umlaufenden Bands (3) verteilt sind, und eine Schnur (5), welche durch die genannten Löcher (4, 4a, 4b) des umlaufenden Bands (3) hindurchgeführt ist, so dass eine Betätigung der genannten Schnur (5) ein Kräuseln des genannten umlaufenden Bands (3) bewirkt und die genannte zentrale Region (2) als verformbaren Behälter für die genannten Nahrungsmittel ausbildet, wobei das genannte elastomere Material dahingehend geeignet ist, dass der genannte Lebensmittel enthaltende Beutel in einen herkömmlichen Ofen oder einen Mikrowellenofen eingeführt oder in eine kalte oder heiße Flüssigkeit getaucht werden kann.

2. Beutel nach Anspruch 1, **dadurch gekennzeichnet, dass** die genannte Reihe von Löchern (4, 4a, 4b) ein Anfangsloch (4a) und ein Endloch (4b) umfasst, und dass die genannte Schnur (5) aus einem elastomeren Material hergestellt ist und zumindest einen mit vorstehenden Rauhigkeiten (8) versehenen Teil hat, welcher in Zusammenwirkung mit Innenflächen des genannten Anfangs- und Endlochs (4a, 4b) als Bremse fungieren kann, um das umlaufende Band (3) in einer geschlossenen Beutelstellung gekräuselt zu halten.

3. Beutel nach Anspruch 2, **dadurch gekennzeichnet, dass** die Schnur (5) zumindest einen weiteren, mit Längsrippen (9) versehenen Teil hat, um das Durchrutschen durch die Löcher (4, 4a, 4b) zu erleichtern.

4. Beutel nach Anspruch 1, 2 oder 3, **dadurch gekennzeichnet, dass** die Schnur (5) in einem aus dem genannten elastomeren Material hergestellten Schließelement (17) integriert ist, wobei das genannte Schließelement (17) einen Handgriff (10) hat, welcher an einem ersten Ende der Schnur (5) angeformt ist.

5. Beutel nach Anspruch 4, **dadurch gekennzeichnet, dass** der genannte Handgriff (10) die Form einer Platte hat und eine Befestigungsausbildung beinhaltet, um das zweite Ende der Schnur ( 5) an dem Handgriff (10) zu befestigen.

6. Beutel nach Anspruch 5, **dadurch gekennzeichnet, dass** der genannte Handgriff (10) des Weiteren eine Einhängeausbildung (21) zum Befestigen des Handgriffs (10) an einem Rand eines Gefäßes beinhaltet.

7. Beutel nach Anspruch 2, **dadurch gekennzeichnet, dass** das genannte Anfangsloch (4a) an das genannte Endloch (4b) angrenzt und beide durch einen verdickten Teil (7) des umlaufenden Bands (3) gebildet sind.

8. Beutel nach Anspruch 7, **dadurch gekennzeichnet, dass** der genannte Folienkörper (1) eine Innenseite (1 a) und eine Außenseite (1 b) hat, und dass das umlaufende Band (3) auf der Außenseite (1 b) des Folienkörpers (1) ein Paar an ersten Bereichen mit an das genannte Anfangs- und Endloch (4a, 4b) angrenzenden Prägungen (13) und zumindest einen zweiten Bereich mit Prägungen (14) auf einem gegenüberliegenden Bereich umfasst.

9. Beutel nach Anspruch 8, **dadurch gekennzeichnet, dass** der genannte verdickte Teil (7) einen sich von der genannte Außenseite (1 b) nach Außen erstreckenden Vorsprung hat.

10. Beutel nach Anspruch 8, **dadurch gekennzeichnet dass** jedes der Löcher (4) in dem umlaufenden Band (3), außer dem Anfangs- und Endloch (4a, 4b), von einem ringförmigen, erhobenen Rand (15) auf zumindest einer der genannten Innenseite (1a) und Außenseite (1 b) des Folienkörpers (1) umgeben ist.

11. Beutel nach Anspruch 8, **dadurch gekennzeichnet, dass** eine Vielzahl an Nasen (20) mit der Fähigkeit, Nahrungsmittel zu fixieren oder zurückzuhalten, von der genannten Innenseite (1a) des Folienkörpers (1) in der zentralen Region (2) abstehend, auf dem umlaufenden Band (3), und/oder in einer Grenzregion zwischen beiden gebildet sind.

12. Beutel nach Anspruch 1, **dadurch gekennzeichnet, dass** das umlaufende Band (3) eine Dicke hat, welche zwischen Bereichen (3a) mit maximaler Dicke, in welchen die Löcher (4, 4a, 4b) liegen, und Bereichen (3b) mit minimaler Dicke, in welchen sich keine Löcher (4, 4a, 4b) befinden, abwechselnd variiert.

13. Beutel nach Anspruch 12, **dadurch gekennzeichnet, dass** die zentrale Region (2) des Folienkörpers (1) Bereiche mit unterschiedlichen Dicken gemäß den genannten Bereichen (3a, 3b) mit maximaler und minimaler Dicke des umlaufenden Bands (3) hat.

14. Beutel nach einem der vorherigen Ansprüche, **dadurch gekennzeichnet, dass** die zentrale Region (2) des genannten Folienkörpers (1) mit zumindest einer Ausnehmung oder Öffnung (6) versehen ist.

15. Beutel nach Anspruch 14, **dadurch gekennzeichnet, dass** die zentrale Region (2) mit einer Vielzahl an Ausnehmungen oder Öffnungen (6) versehen ist.

16. Beutel nach Anspruch 15, **dadurch gekennzeichnet, dass** die genannten Ausnehmungen oder Öffnungen (6) in der zentralen Region (2) dazu gebildet sind, eine Maschenstruktur mit der Fähigkeit, sich durch elastische Verformung auszudehnen, zu liefern.

17. Beutel nach Anspruch 16, **dadurch gekennzeichnet, dass** sich die genannte, durch die Ausnehmungen oder Öffnungen (6) gelieferte Maschenstruktur im Wesentlichen über die gesamte zentrale Region (2) zu dem umlaufenden Band (3) erstreckt.

18. Beutel nach einem der vorherigen Ansprüche, **dadurch gekennzeichnet, dass** das genannte elastomere Material ein platinkatalysiertes Silikon ist.

19. Verfahren zur Herstellung eines Folienkörpers, welcher Teil eines Beutels zum Kochen von Nahrungsmitteln ist, welches folgende Schritte umfasst:
Ausführen eines Form- und Vulkanisierungsvorgangs zum Formen und Vulkanisieren eines elastomeren Materials zur Herstellung des genannten Folienkörpers (1) mit einer zentralen Region (2), welche von einem umlaufenden Band (3) und einer Reihe von Löchern (4, 4a, 4b) umgeben ist, welche entlang des genannten umlaufenden Bands (3) verteilt sind;
und
Unterziehen des Folienkörpers (1) einem nachfolgenden Schneide- oder Stanzvorgang zur Bildung zumindest einer Ausnehmung oder Öffnung (6) in der genannten zentralen Region (2).

20. Verfahren nach Anspruch 19, **dadurch gekennzeichnet, dass** es das Bilden einer Vielzahl der genannten Ausnehmungen oder Öffnungen (6) in der zentralen Region (2) durch den genannten Schneide- oder Stanzvorgang umfasst, wobei die genannten Ausnehmungen oder Öffnungen (6) dazu ausgebildet sind, eine Maschenstruktur mit der Fähigkeit, sich durch elastische Verformung auszudehnen, zu liefern.

21. Verfahren nach Anspruch 20, **dadurch gekennzeichnet, dass** es das Bilden der genannten, durch die Ausnehmungen oder Öffnungen (6) gelieferte Maschenstruktur dahingehend umfasst, dass sie sich im Wesentlichen über die gesamte zentrale Region (2) zu dem umlaufenden Band (3) erstreckt.

22. Verfahren nach Anspruch 19, 20 oder 21, **dadurch gekennzeichnet, dass** es die Verwendung eines platinkatalysierten Silikons als das genannte elastomere Material zur Herstellung des Folienkörpers (1) durch den genannten Form- und Vulkanisierungsvorgang umfasst.

## Revendications

1. Une poche pour cuire des aliments comportant un corps de feuilles (1) fabriqué en un matériau élastomère ayant une région interne ou centrale (2) entourée d'une bande périmétrale (3) et une série de trous (4, 4a, 4b) distribués le long de cette bande périmétrale (3), et un cordon (5) passé à travers ces trous (4, 4a, 4b) de la bande périmétrale (3) de sorte que lorsqu'on agit sur ce cordon (5) cela entraîne le rassemblement de cette bande périmétrale ((3) et donne à cette région centrale (2) la forme d'un récipient déformable pour ces aliments, cet élastomère étant approprié pour que cette poche contenant les aliments puisse être introduite dans un four conventionnel ou un four micro-ondes, ou plongée dans un liquide froid ou chaud.

2. Une poche conformément à la revendication 1, **caractérisée en ce que** cette série de trous (4, 4a, 4b) comporte un trou initial (4a) et un trou final (4b), et ce cordon (5) est fabriqué en un élastomère et possède au moins une portion pourvue de rugosités en saillie (8) capable d'agir comme frein en coopération avec les surfaces internes de ces trous initial et final (4a,4b) afin de retenir la bande périmétrale (3) réunie dans une position de poche fermée.

3. Une poche conformément à la revendication 2, **caractérisée en ce que** le cordon (5) possède au moins une portion complémentaire pourvue de nervures longitudinales (9) afin de faciliter le glissement à travers les trous (4, 4a, 4b).

4. Une poche conformément à la revendication 1, 2 ou 3, **caractérisée en ce que** le cordon (5) est intégré dans un élément de fermeture (17) fabriqué en cet élastomère, cet élément de fermeture (17) ayant une poignée (10) intégralement formée sur une première extrémité du cordon (5).

5. Une poche, conformément à la revendication 4, **caractérisée en ce que** cette poignée (10) a la forme d'une plaque et comporte une configuration de sécurité pour fixer la deuxième extrémité du cordon (5) sur la poignée (10).

6. Une poche conformément à la revendication 5, **caractérisée en ce que** cette poignée (10) comporte de plus une configuration en crochet (21) pour fixer la poignée (10) sur un bord du récipient.

7. Un poche conformément à la revendication 2, **caractérisée en ce que** ce trou initial (4a) est contigu à ce trou final (4b) et ils sont tous les deux formés à travers une portion grossie (7) de la bande périmétrale (3).

8. Une poche conformément à la revendication 7, **caractérisée en ce que** ce corps en feuilles (1) possède une face interne (1a) et une face externe (1b) et la bande périmétrale (3) comporte, sur la face extérieure (1 b) du corps en feuilles (1) une paire de premières régions ayant des bosses (13) adjacentes à ces trous initial et final (4a, 4b) et au moins une deuxième région ayant des bosses (14) sur une région opposée.

9. Une poche conformément à la revendication 8, **caractérisée en ce que** cette portion grossie (7) forme une protubérance s'étendant vers l'avant de cette face extérieure (1b).

10. Une poche conformément à la revendication 8, **caractérisée en ce que** chacun des trous (4) dans la bande périmétrale (3), excepté les trous initial et final (4a, 4b) est entouré d'un bord bombé annulaire (15) sur au moins une de ces faces internes (1a) et face externe (1 b) du corps de feuilles (1).

11. Une poche, conformément à la revendication 8, **caractérisée en ce qu'**une pluralité de protubérances (20) ayant la capacité de fixer ou de retenir les aliments est formée se projetant de cette face interne (1a) du corps de feuilles (1) dans la région centrale (2) sur la bande périmétrale (3) et/ou dans une région limite entre les deux.

12. Une poche conformément à la revendication 1, **caractérisée en ce que** la bande périmétrale (3) a une grosseur variant alternativement entre des régions à grosseur maximale (3a) dans lesquelles les trous (4, 4a, 4b) sont situées, et des régions à grosseur minimale (3b) dans lesquelles il n'y a pas de trous (4,4a,4b).

13. Une poche conformément à la revendication 12, **caractérisée en ce que** la région centrale (2) du corps de feuilles (1) comporte des régions ayant des grosseurs différentes conformément à ces régions à grosseur maximale et minimale (3a, 3b) de la bande périmétrale 3.

14. Une poche conformément à une quelconque des revendications précédentes, **caractérisée en ce que** la région centrale (2) de ce corps de feuilles (1) est pourvu d'au moins une entaille ou ouverture (6).

15. Une poche conformément à la revendication 14, **caractérisée en ce que** la région centrale (2) est pourvue d'une pluralité d'entailles ou d'ouvertures (6).

16. Une poche conformément à la revendication 15, **caractérisée en ce que** des entailles ou ouvertures (6) dans la région centrale (2) sont formées pour fournir une structure de mailles ayant la capacité de s'étendre par déformation élastique.

17. Une poche conformément à la revendication 16, **caractérisée en ce que** cette structure de mailles pourvue d'entailles ou d'ouvertures (6) s'étend sensiblement sur toute la région centrale (2) jusqu'à la bande périmétrale (3).

18. Une poche conformément à une quelconque des revendications précédentes, **caractérisée en ce que** cet élastomère est une silicone catalysée de platine.

19. Une méthode pour fabriquer un corps de feuilles faisant partie d'une poche pour cuire des aliments comportant les étapes:
effectuer l'opération de moulage et de vulcanisation pour mouler et vulcaniser un élastomère pour produire ce corps de feuilles (1) ayant une région centrale (2) entourée d'une bande périmétrale (3) et une série de trous (4, 4a, 4b) distribués le long de cette bande périmétrale (3); et
soumettre le corps de feuilles (1) à une opération de coupage ou de découpage à l'emporte pièce pour former au moins une entaille ou ouverture (6) dans cette région centrale (2).

20. Une méthode conformément à la revendication 19, **caractérisée en ce qu'**elle comporte la formation d'une pluralité de ces entailles ou ouvertures (6) dans la région centrale (2) au moyen de cette opération de coupage ou de découpage à l'emporte pièce, ces entailles ou ouvertures (6) étant configurées pour fournir une structure de mailles ayant la capacité de s'étendre par déformation élastique.

21. Une méthode conformément à la revendication 20, **caractérisée en ce qu'**elle comporte la formation de cette structure de mailles offerte par les entailles ou ouvertures (6) s'étendant sensiblement sur toute la région centrale (2) de la bande périmétrale (3).

22. Une méthode conformément à la revendication 19, 20 ou 21, **caractérisée en ce qu'**elle comporte l'utilisation de silicone catalysée de platine comme cet élastomère pour produire le corps de feuilles (1) au moyen de cette opération de moulage et de vulcanisation.
